# EUROPÄISCHE PATENTSCHRIFT

(11) **EP 2 198 497 B1**
(45) Veröffentlichungstag und Bekanntmachung des Hinweises auf die Patenterteilung: **03.06.2020**
(21) Anmeldenummer: 08802851.9
(22) Anmeldetag: 09.10.2008
(51) Int. Cl.: H02J 3/38, F03D 9/25

(54) **WINDENERGIEANLAGEN MIT REGELUNG FÜR NETZFEHLER UND BETRIEBSVERFAHREN HIERFÜR**
WIND TURBINES HAVING CONTROL FOR NETWORK FAULTS AND OPERATING METHOD THEREFOR
INSTALLATIONS DE PRODUCTION D'ENERGIE EOLIENNE AVEC REGULATION DES DEFAUTS DU RESEAU, ET PROCEDE D'EXPLOITATION CORRESPONDANT

(30) Priorität: 12.10.2007 DE 102007049251
(43) Veröffentlichungstag der Anmeldung: 23.06.2010
(73) Patentinhaber: Senvion GmbH, 22297 Hamburg (DE)
(72) Erfinder: FORTMANN, Jens, 13156 Berlin (DE)
(74) Vertreter: Glawe, Delfs, Moll
(86) Internationale Anmeldenummer: PCT/EP2008/008545
(87) Internationale Veröffentlichungsnummer: WO 2009/049822

(56) Entgegenhaltungen:
- US-A1- 2004 010 350
- FAINAN MAGUEED ET AL: "Operation of Distributed Generation in Weak Grids with Local Critical Load" IEEE INDUSTRIAL ELECTRONICS, IECON 2006 - 32ND ANNUAL CONFERENCE ON, IEEE, PISCATAWAY, NJ, USA, 1. November 2006 (2006-11-01), Seiten 2414-2419, XP031076981 ISBN: 978-1-4244-0135-2
- IWANSKI G ET AL: "Synchronization and Mains Outage Detection for Controlled Grid Connection of the Wind Driven Variable Speed Power Generation System" CLEAN ELECTRICAL POWER, 2007. ICCEP '07. INTERNATIONAL CONFERENCE ON, IEEE, PI, 1. Mai 2007 (2007-05-01), Seiten 585-590, XP031115935 ISBN: 978-1-4244-0631-9
- DING X ET AL: "Future distribution networks with distributed generators capable of operating in islanded mode", UNIVERSITIES POWER ENGINEERING CONFERENCE, 2004. UPEC 2004. 39TH INTER NATIONAL BRISTOL, UK 6-8 SEPT. 2004, PISCATAWAY, NJ, USA,IEEE, PISCATAWAY, NJ, USA, vol. 2, 6 September 2004 (2004-09-06), pages 773-776, XP010825098, ISBN: 978-1-86043-365-8
- X Ding ET AL: "Protection And Control Of Networks With Distributed Generators Capable Of Operating In Islanded Mode INTRODUCTION", , 5 April 2004 (2004-04-05), XP55372551, Retrieved from the Internet: URL:http://ieeexplore.ieee.org/ielx5/9421/ 29899/01364941.pdf?tp=&arnumber=1364941&is number=29899 [retrieved on 2017-05-15]

## Beschreibung

Die Erfindung betrifft eine Windenergieanlage mit einem durch einen Windrotor angetriebenen Generator und einem Umrichter zur Erzeugung elektrischer Energie, die in ein Netz eingespeist wird, und einer Steuereinrichtung.

In elektrischen Energieübertragungs- bzw. Verteilernetzen muss stets damit gerechnet werden, dass es auf Grund von Kurzschlüssen zu einer Inselnetzbildung kommen kann. In einem Inselnetz laufen die Spannung, Frequenz sowie die Phase nicht mehr synchron mit den entsprechenden Parametern des Hauptnetzes. Dies kann insbesondere bei Wiederzuschalten nach Klärung des Netzfehlers dazu führen, dass hohe Ausgleichsströme fließen, wodurch es zu Überlastung oder zu Beschädigungen an Komponenten kommen kann. Darüber hinaus besteht bei herkömmlichen Kraftwerken mit Synchrongeneratoren die Gefahr, dass die Abweichungen des Inselnetzes so groß werden, dass der Generator beim Zuschalten an das Restnetz kippt.

Windenergieanlagen sind häufig an Standorten mit hohem Windangebot und geringer Besiedlungsdichte vorgesehen. In vielen Fällen bedingt dies einen Anschluss der Windenergieanlagen über verhältnismäßig lange und nur wenig vermaschte Ausläufer eines Energieübertragungsnetzes. Aufgrund dieser Anordnung sind Windenergieanlagen verhältnismäßig leicht von einer Inselbildung des Netzes im Störfall betroffen.

Dies gilt sowohl für einzeln stehende Windenergieanlagen wie auch für mehrere zu einem Windpark zusammen gefasste Windenergieanlagen.

Sind Windenergieanlagen in dem Inselnetz angeordnet, so kommt es bei ihnen leicht zu einem verhältnismäßig schnellen Anstieg der Netzfrequenz. Ein bedeutender Faktor hierfür ist, dass Windenergieanlagen - anders als die bei herkömmlichen Kraftwerken verwendeten Synchrongeneratoren - nur eine geringe Massenträgheit haben. Auf Grund der höheren Abweichung kann es bei Wiederzuschaltung zu Ausgleichsvorgängen in erheblicheren Umfang kommen, wodurch die Gefahr von Schädigungen besteht.

Die Publikationen von FAINAN MAGUEED ET AL: "Operation of Distributed Generation in Weak Grids with Local Critical Load", IEEE 32ND ANNUAL CONFERENCE ON INDUSTRIAL ELECTRONICS, IECON 2006 vom 1. November 2006, Seiten 2414-2419, und von IWANSKI G ET AL: "Synchronization and Mains Outage Detection for Controlled Grid Connection of the Wind Driven Variable Speed Power Generation System", INTERNATION CONFERENCE ON CLEAN ELECTRICAL POWER, 2007. ICCEP '07, vom 1. Mai 2007, Seiten 585-590 präsentieren herkömmliche Lösungen zum Betrieb von Windenergieanalagen bei Kurzschlüssen bzw. Inselbildung.

Der Erfindung liegt die Aufgabe zugrunde, Windenergieanlagen der eingangs genannten Art dahingehend zu verbessern, dass sie bei Kurzschlüssen bzw. Inselbildung im Netz ein günstigeres Verhalten zeigen.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einer Windenergieanlage mit einem durch einen Windrotor angetriebenen Generator und einem Umrichter zur Erzeugung elektrischer Energie, die in ein Netz eingespeist wird, und einer Steuereinrichtung vorgesehen, dass die Steuereinrichtung ein Netzstörungsmodul aufweist, welches eine Messeinrichtung für mindestens einen elektrischen Parameter des Netzes, einen Detektor zur Erkennung einer Netzstörung und Ausgabe eines Schaltsignals, einen Referenzgenerator, der basierend auf dem von der Messeinrichtung bestimmten Parameter einen Ersatzführungsvektor für den Umrichter erzeugt, und eine Fehlerführungseinheit umfasst, die einen Fehlerklassifikator aufweist und mit den anderen Komponenten derart zusammenwirkt, dass in einem Unterspannungsfall bei Inselbetrieb ein schneller Frequenzregler aktiviert ist, der auf den Umrichter einwirkt, um bei Abweichen der Netzfrequenz die Wirkleistungseinspeisung zu ändern.

Die Funktionsweise der Erfindung ist wie folgt: Mittels der Messeinrichtung werden elektrische Parameter des Netzes gemessen und daraus Frequenz- und/oder Phasenlage bestimmt. Die Messeinrichtung ist vorzugsweise so ausgebildet, dass sie bei einem Netzfehler weiterhin die Netzfrequenz bzw. Phasenlage bereitstellt. Mittels des Detektors kann anhand dieses Signals und gewünschtenfalls weiterer Signale, wie Spannung oder Strom oder eines von außerhalb vorgegebenen Signals, bestimmt werden, ob sich ein Inselnetz gebildet hat. Erkennt der Detektor anhand der Signale eine Inselnetzbildung, so gibt er das entsprechende Schaltsignal aus. Der Referenzgenerator ist dazu ausgebildet, einen Referenzwert zu erzeugen, welcher als Führungsvektor an den Umrichter angelegt ist. Der Referenzwert wird über die Zeitdauer der von dem Detektor festgestellten Netzstörung erzeugt. Es kann sich hierbei beispielsweise um eine Phasengröße, einen Drehzeiger oder einen Festzeiger handeln. Mit dem Führungsvektor kann der Umrichter auch bei Netzausfall betrieben werden wie ein netzgeführter Umrichter. Damit kann auch bei einem schweren Spannungseinbruch mit einer sehr tiefen Restspannung (Kurzschluss), beispielsweise unterhalb einer Schwelle von 5-15% der Nennspannung, noch eine weitere Einspeisung von Strom in das Netz erfolgen, während herkömmliche Windenergieanlagen mangels sicherer Erkennung der Phasenlage bei einer derart niedrigen Spannung die weitere Einspeisung einstellen würden. Damit kann Dank der Erfindung das Netz gerade in dem Fall eines starken Spannungseinbruchs mit geringer Restspannung durch weitere Einspeisung gestützt werden.

Der Fehlerklassifikator ist dazu ausgebildet, verschiedene Arten von Netzstörungen zu unterscheiden. Erkennt der Fehlerklassifikator zusammenwirkend mit dem Detektor eine Inselnetzbildung, so wird über den Fehlerklassifikator die Frequenzregeleinheit aktiviert. Diese ist dazu ausgebildet mit einer schnellen Zeitkonstante (weniger als 100ms) die Frequenz der von dem Umrichter abgegebenen Leistung auf einen gewünschten Wert zu regeln. Die Frequenzregeleinheit bewerkstelligt dies, in dem sie über den Umrichter die Wirkleistungseinspeisung verändert, und zwar derart, dass sowohl die Frequenz und vorzugsweise auch die Phasenlage der Spannung auf einen Sollwert eingeregelt werden.

Nachfolgend seien einige verwendete Begriffe erläutert:
Unter einem Inselnetz wird ein Netzfehler verstanden, bei dem ein Teil des Netzes, indem die jeweilige Windenergieanlage angeschlossen ist, nicht mehr mit dem Gesamtnetz in der Weise verbunden ist, dass gleiche Spannungs- und Frequenzverhältnisse herrschen.

Unter Führungsvektor wird ein Steuersignal für den Umrichter verstanden, das eine oder mehrere Elemente enthält, welche ein Schaltverhalten des Umrichters bestimmen und damit die von dem Umrichter abgegebene Wirk-/Blindleistung bestimmen.

Unter einer schnellen Regelung wird eine Regelung verstanden, welche eine Zeitkonstante aufweist, die um mindestens eine Größenordnung kleiner ist als eine herkömmliche Frequenzregelung. Vorzugsweise handelt es sich um Zeitkonstanten von 100ms oder weniger. Dies kann erreicht werden indem beispielsweise Sollkurven, Funktionen oder Tabellen in der Frequenzregeleinheit hinterlegt sind, die beispielsweise mit steigender Frequenz die Wirkleistungseinspeisung reduzieren.

Der Kern der Erfindung beruht auf dem Gedanken, drei verschiedene Aspekte zu kombinieren. Der erste Aspekt liegt darin, einen Netzfehler und damit die mögliche Bildung eines Inselnetzes zu erkennen. Der zweite Aspekt liegt darin, für die Windenergieanlage einen eigenen Referenzwert in Bezug auf die Netzfrequenz bzw. Phase bereitzustellen, sodass sie nicht auf eine - in Folge des Netzfehlers gar nicht mehr zur Verfügung stehende - Führung durch das Netz angewiesen ist. Der dritte Aspekt besteht darin, dass bei Inselnetzbildung eine schnelle Frequenzregelung bereitgestellt wird, welche die Windenergieanlage mit ihrem Umrichter so regelt, dass die abgegebene elektrische Leistung eine solche Frequenz und möglichst auch Phasenlage aufweist, die mit derjenigen gemäß dem Referenzwert übereinstimmt. Dies bedeutet, der Frequenzregler verändert die Wirkleistungseinspeisung derart, dass die Regeldifferenz möglichst den Wert Null erreicht. Damit wird erreicht, dass der Umrichter auch im Falle einer zeitweiligen Inselnetzbildung eine solche Netzfrequenz (und ggf. Phasenlage) beibehält, die synchron zum Restnetz ist. Ausgleichsströme, wie sie nach Fehlerklärung auftreten, treten dank der Erfindung nicht oder nur in geringem Umfang auf. Dies ist ein erheblicher Vorteil gegenüber herkömmlichen Windenergieanlagen, die häufig eine Inselnetzbildung überhaupt nicht erkennen und bei denen dann der Umrichter, mangels Führung durch das Netz und auf Grund fehlender Trägheit die Frequenz des Restnetzes nicht halten kann. Es kommt dann zu Frequenzabweichungen und erheblichen Ausgleichsströmen nach Fehlerklärung. Windenergieanlagen mit Umrichtern erhalten dank der Erfindung damit eine Stabilität gegenüber Netzfehlern, wie Spannungseinbrüchen oder Kurzschlüssen mit Inselnetzbildung, die vergleichbar ist zu derjenigen von großen herkömmlichen Kraftwerken mit Synchrongeneratoren, die auf Grund ihrer Massenträgheit eine beträchtliche natürliche Frequenzstabilität aufweisen. Damit können Windenergieanlagen bei Kurzschlüssen und dadurch auftretender zeitweiliger Bildung eines Inselnetzes, wie es sie insbesondere bei Anschluss der Windenergieanlagen an langen nicht vermaschten Netzausläufern auftreten, nahezu synchron mit dem Restnetz weiter betrieben werden.

Vorzugsweise umfasst die Fehlerführungseinheit weiter einen Spannungsregler, der dazu ausgebildet ist, durch Ändern von Blindleistungseinspeisung die Spannung der vom Umrichter abgegebenen elektrischen Leistung zu regeln. Damit kann die Spannung auf einen Sollwert geregelt werden. Dabei ist der Sollwert zweckmäßigerweise ein Element des Führungsvektors, der durch den Referenzgenerator bestimmt ist, und entspricht etwa der Spannung im Netz vor Eintreten des Netzfehlers. Kann eine Regelung auf einen solchen Wert nicht erreicht werden, so ist zweckmäßiger Weise eine Hilfsbetriebsart für den Spannungsregler vorgesehen, bei der die Spannung auf einen Maximalwert geregelt wird, der noch nicht zu einer Überlastung des Umrichters führt.

Die Fehlerführungseinheit ist zweckmäßigerweise weiter dazu ausgebildet ist, dass in einem Kurzschlussfall der Umrichter mit dem Führungsvektor als Ersatz geführt werden kann.

Mit der Fehlerführungseinheit kann eine Netzfolgeeinheit zusammenwirken. Sie ist dazu ausgebildet, einen Differenzwinkel zwischen dem Phasenwinkel im Netz und dem Phasenwinkel der von dem Umrichter der Windenergieanlage eingespeisten Leistung zu begrenzen. Dazu weist sie zweckmäßigerweise einen Winkelablagedetektor, mit dem aus Signalen für die Frequenz am Netz und am Umrichter eine Differenz gebildet wird und damit eine Winkelablage bestimmt wird, und einen Begrenzer auf, der die Winkelablage auf einen vorgebbaren Differenzwinkel beschränkt. Bildet sich bei einer Netzstörung ein Inselnetz, das außer der Windenergieanlage noch weitere Erzeuger enthält, so wird die Frequenz und Phase im Netz nicht allein durch die Windenergieanlage bestimmt, so dass es zu Unterschieden kommen kann. Dabei stellt sich ein Differenzwinkel ein, der u. a. durch die Leistungseinspeisung der Windenergieanlage in das Inselnetz und die Art und Anzahl der Verbraucher der bestimmt ist. Durch Verstellen des Winkels, mit dem der Umrichter der Windenergieanlage in das Netz einspeist, kann der Winkel der Netzspannung verändert werden. Hierbei dürfen Änderungen des Netzwinkels aber nicht zu groß werden, um eine Überlastung der Windenergieanlage in Bezug auf die eingespeiste Leistung und Regelschwingungen wegen zu schneller Änderung zu vermeiden.

Mit Vorteil ist die Fehlerführungseinheit dazu ausgebildet, ein Ende des Netzfehlers zu erkennen und ein zweites Schaltsignal an die Fehlerführungseinheit auszugeben. Dazu wird der Verlauf der Netzspannung und/oder die Änderung der Phasenlage überwacht. Bei schnellem Wiederanstieg bzw. sprungartiger Änderung kann die schnelle Frequenzregelung beendet und die Wirkleistung wieder wie vor Eintritt des Fehlers geregelt werden. Um dabei einen möglichst gleichmäßigen Übergang zu erzielen, weist die Fehlerführungseinheit vorzugsweise ein Transitmodul auf, das beim Beenden der schnellen Frequenzregelung die Wirkleistung mittels einer Übergangsfunktion, beispielsweise einer Rampenfunktion, auf einen Vorgabewert zurückführt. Bei dem Vorgabewert kann es sich um einen aktuell geforderten Wert, wie den im Netz vorhandenen Wert, oder um den ursprünglichen Wert vor Eintritt des Netzfehlers handeln.

Mit Vorteil weist die Fehlerführungseinheit einen Eingangskanal auf, über den bei Inselbetrieb zumindest die Frequenz und/oder Phasenlage vorgebbar sind. Damit kann gewünschtenfalls eine externe Steuerung der Windenergieanlage erreicht werden. Dies ist insbesondere dann von großem Vorteil, wenn nicht nur eine Windenergieanlage, sondern ein Windpark mit mehreren Windenergieanlagen gesteuert werden soll oder sich Windenergieanlagen miteinander synchronisieren sollen. In entsprechender Weise weist die Fehlerführungseinheit ferner einen Ausgangskanal auf, über den bei Inselbetrieb der Führungsvektor ausgegeben wird. Damit können externe Leitstellen oder andere Windenergieanlagen über die Frequenz, Phasenlage bzw. Spannung informiert werden, um ihnen so eine Synchronisation zu ermöglichen.

Vorzugsweise weist die Fehlerführungseinheit ein Zeitmodul auf. Es dient dazu, dass Verhalten der Windenergieanlage nach Eintritt eines Netzfehlers zu steuern, und zwar zweckmäßigerweise in Abhängigkeit von weiteren Bedingungen. So kann vorgesehen sein, dass nach Verstreichen einer vorgebbare Zeitdauer oder Unterschreiten einer zeitabhängigen Spannungs- und/oder Frequenzbegrenzungskennlinie die Windenergieanlage heruntergefahren oder vom Netz getrennt wird. Dazu wirkt das Zeitmodul zweckmäßigerweise mit dem Fehlerklassifikator zusammen. So kann es dazu ausgebildet sein, dass bei anhaltend niedriger Spannung nahe Null die Windenergieanlage erst nach einer einstellbaren ersten, verhältnismäßig kurzen Zeitdauer vom Netz getrennt wird und bis dahin weiter einspeist. Dieser Fall ist insbesondere dann von Bedeutung, wenn ein Kurzschluss sehr nahe an der Windenergieanlage liegt, bei dem nicht davon auszugehen ist, dass es zu einer baldigen Klärung des Kurzschlusses kommt. Durch eine rasche Trennung kann sichergestellt werden, dass es nicht zu einer unzulässig langen Einspeisung auf einen Kurzschluss nahe der Windenergieanlage kommt. Umgekehrt gilt, dass wenn die Spannung um einen gewissen Betrag ansteigt, dies ein Hinweis darauf ist, dass der Fehler in einem größeren Abstand zur Windenergieanlage liegt. Es kann dann davon ausgegangen werden, dass eine Klärung des Fehlers möglich ist, so dass eine längere Zeitdauer bis zur Abschaltung der Windenergieanlage vorgesehen sein kann. Nach einer vorgebbaren zweiten Zeitdauer wird geprüft, ob eine andauernde Unterspannung (von beispielsweise weniger als 50% der Nennspannung) vorliegt. Dann ist von einem schweren nicht geklärten Netzfehler auszugehen und die Windenergieanlage wird heruntergefahren. Ebenso kann bei erkanntem Inselbetrieb die Windenergieanlage nach Ablauf einer bestimmten dritten Zeitdauer heruntergefahren werden; es soll aber nicht ausgeschlossen werden, dass der Betrieb fortgesetzt wird und nur auf ein externes Signal hin heruntergefahren wird. Die Windenergieanlage wird also erst später bzw. gar nicht abgeschaltet. Damit wird die Betriebssicherheit des Gesamtnetzes erhöht, da mehr Windenergieanlagen bei Netzfehlern einspeisen.

Das Netzstörungsmodul kann mit Vorteil ein Synchronisationsmodul aufweisen, wenn die Windenergieanlage benachbart ist zu anderen Windenergieanlagen, wie in einem Windpark. Das Synchronisationsmodul ist mit der Fehlerführungseinheit und dem Frequenzregler verbunden und wirkt mit diesen derart zusammen, um den Führungsvektor mit einer externen Stelle abzugleichen. Mit einem Abgleich können unerwünschte Abweichungen zwischen den Windenergieanlagen, wie sie aufgrund von unvermeidlichen Unterschieden zwischen Signalerfassung und -verarbeitung aufgrund nicht idealer Genauigkeit entstehen, erkannt und kompensiert werden. Dazu wird zweckmäßigerweise die Frequenz und Phasenlage und gegebenenfalls auch die Spannung erfasst und mit einem Zeitstempel als Vektor abgespeichert. Damit können Winkeldifferenzen zwischen den Windenergieanlagen bestimmt werden. Zu diesem Zweck weist das Synchronisationsmodul vorzugsweise eine Zeitreferenz auf. Es soll aber nicht ausgeschlossen sein, dass es auf ein Zeitmodul der Fehlerführungseinheit zurückgreift. Zum Kontakt mit den anderen Windenergieanlagen, einem Parkmaster bei Aufstellung der Windenergieanlage in einem Windpark oder zu einer externen Stelle, beispielsweise der Leitwarte des Netzbetreibers, weist das Synchronisationsmodul mit Vorteil eine Kommunikationseinheit auf. Es kann aber zur Vermeidung von Aufwand auch so mit der Fehlerführungseinheit zusammenwirken, dass deren Eingangs- und Ausgangskanal zum Synchronisieren herangezogen wird.

Der Generator kann von an sich beliebiger Bauart sein, beispielsweise ein Synchrongenerator, ein Asynchrongenerator oder vorzugsweise ein doppelt gespeister Asynchrongenerator. Letzterer bietet den Vorteil, dass die schnelle Frequenzregelung bei Bedarf sogar auf beide Wechselrichter des Umrichters einwirken könnte, um durch entsprechende Aufnahme bzw. Einspeisung von Wirkleistung eine schnelle Frequenzveränderung zu erzielen.

Weiter kann zweckmäßigerweise ein Chopper (eine Schaltung zur Vernichtung von Energie in dem Zwischenkreis des Umrichters) vorgesehen sein, wobei die schnelle Frequenzregelung auf den Chopper einwirkt. Durch Ansteuern des Choppers wird Energie vernichtet, also Wirkleistung reduziert, wodurch schnell und effizient auf die Frequenz eingewirkt werden kann. Zusätzlich oder alternativ kann auch ein steuerbarer Widerstand als Verbraucher vorgesehen sein, der ebenfalls zur Reduzierung von Wirkleistung eingesetzt werden kann.

Die Erfindung bezieht sich weiter auf ein Verfahren zum Betreiben einer Windenergieanlage mit einem durch einen Windrotor angetriebenen Generator und einem Umrichter zur Erzeugung elektrischer Energie, die in ein Netz eingespeist wird, mit den Schritten: Messen mindestens eines elektrischen Parameters des Netzes, Detektieren und Ausgeben eines Schaltsignals, Generieren eines Referenzwertes als Führungsvektor für den Umrichter basierend auf dem gemessenen Parameter, Klassifizieren eines Fehlers bei Erkennen des Schaltsignals, wobei in einem Kurzschlussfehlerfall der Umrichter mit dem Führungsvektor anstelle des Netzes geführt wird zur Einspeisung elektrischer Leistung, und in einem Unterspannungsfehlerfall bei Inselbetrieb eine schnelle Frequenzregelung durchgeführt wird, bei der durch Ändern der Wirkleistungseinspeisung die Netzfrequenz geregelt wird.

Zur näheren Erläuterung des Verfahrens und vorteilhafter Weiterbildungen wird auf obige Ausführungen verwiesen.

Die Erfindung erstreckt sich weiter auf einen Windpark mit mehreren Windenergieanlagen, mit einem Parkmaster, wobei das Netzstörungsmodul in dem Parkmaster angeordnet ist, und ein Verfahren zum Betreiben dieses Windparks. Für einzelne Windenergieanlagen des Parks werden Werte für die Wirk- und ggf. Blindleistung ermittelt, an die Windenergieanlagen übermittelt und auf diese Weise die gewünschte Frequenzregelung bzw. Spannungsregelung erreicht, wie vorstehend näher beschrieben ist. Zur Synchronisierung der Windenergieanlagen kommunizieren diese zweckmäßigerweise mit dem Parkmaster. Sie können aber auch untereinander kommunizieren, was die Betriebssicherheit gegenüber einem Ausfall des Parkmasters erhöht. Es kann aber auch vorgesehen sein, dass mit einer parkexternen Stelle, wie der Leitwarte des Netzbetreibers, kommuniziert wird und auf Werte von dieser synchronisiert wird. Dies bietet den Vorteil, dass der Windpark auch bei länger anhaltendem Inselnetz synchron mit dem Netz betrieben werden kann.

Die Erfindung wird nachfolgend unter Bezugnahme auf die beigefügte Zeichnung erläutert, in der ein vorteilhaftes Ausführungsbeispiel der Erfindung dargestellt ist. Es zeigen:
- Fig. 1: eine schematische Ansicht einer Windenergieanlage gemäß einem Ausführungsbeispiel der Erfindung;
- Fig. 2: eine schematisierte Darstellung des Anschlusses einer Windenergieanlage an ein Netz;
- Fig. 3: eine schematische Darstellung eines Netzstörungsmoduls gemäß der Erfindung;
- Fig. 4: Diagramme zu Phasenwinkeln im Netz während eines Netzfehlers; und
- Fig. 5: eine optionale Erweiterung des Netzstörungsmoduls gemäß Figur 3.

Eine Windenergieanlage gemäß einem ersten Ausführungsbeispiel der Erfindung umfasst einen Turm 10 mit einem schwenkbar an seinem oberen Ende angeordneten Maschinenhaus 11. An dessen Stirnseite ist ein Windrotor 12 drehbar angeordnet, der über eine Rotorwelle (nicht dargestellt) einen Generator 2 der Windenergieanlage antreibt. Mit dem Generator 2 verbunden ist ein Umrichter 3. Weiter ist in dem Maschinenhaus 11 eine Steuereinrichtung 4 angeordnet, welche über (nicht dargestellte) Signalleitungen mit dem Generator 2 und dem Umrichter 3 sowie mit externen Signalquellen (nicht dargestellt) verbunden ist.

Der vom Wind angetriebene Rotor 12 führt über die Rotorwelle mechanische Energie dem Generator 2 zu, welcher entsprechend elektrische Energie erzeugt. Bei dem Generator 2 handelt es sich vorzugsweise um eine doppelt gespeiste Asynchronmaschine mit einer Statorwicklung und einer Rotorwicklung.

An die Statorwicklung ist eine Anschlussleitung 16 angeschlossen, die über einen Mittelspannungstransformator 17 am Fuße des Turms 10 und ein Schaltschütz 18 mit einem Energieverteilungsnetz 9 verbunden ist. An die Rotorwicklung des Generators 2 ist der Umrichter 3 mit seinem maschinenseitigen Wechselrichter 31 angeschlossen, der über einen Zwischenkreis 32 mit einem netzseitigen Wechselrichter 33 des Umrichters 3 verbunden ist. Dieser ist an die Anschlussleitung 16 angeschlossen. Weiter ist an den Zwischenkreis 32 ein Chopper 34 angeschlossen, der auf ein Schaltsignal elektrische Energie aus dem Zwischenkreis 32 entnimmt und in Wärme umwandelt.

Die Steuereinrichtung 4 ist dazu ausgebildet, den Umrichter 3 in Abhängigkeit von verschiedenen Vorgaben zu steuern, insbesondere die von dem Umrichter 3 erzeugte Wirk- und Blindleistung zu kontrollieren. Die Steuereinrichtung 4 kann von einer übergeordneten Betriebssteuerung (nicht dargestellt) und/oder einem Parkmaster 7, mit dem sie über (nicht dargestellte) Kommunikationsverbindungen in Verbindung steht, mit Steuer- und/oder Führungsgrößen versorgt sein. Weiter kann vorgesehen sein, externe Steuersignale aufzuschalten, beispielsweise mittels Datenfernübertragung (nicht dargestellt).

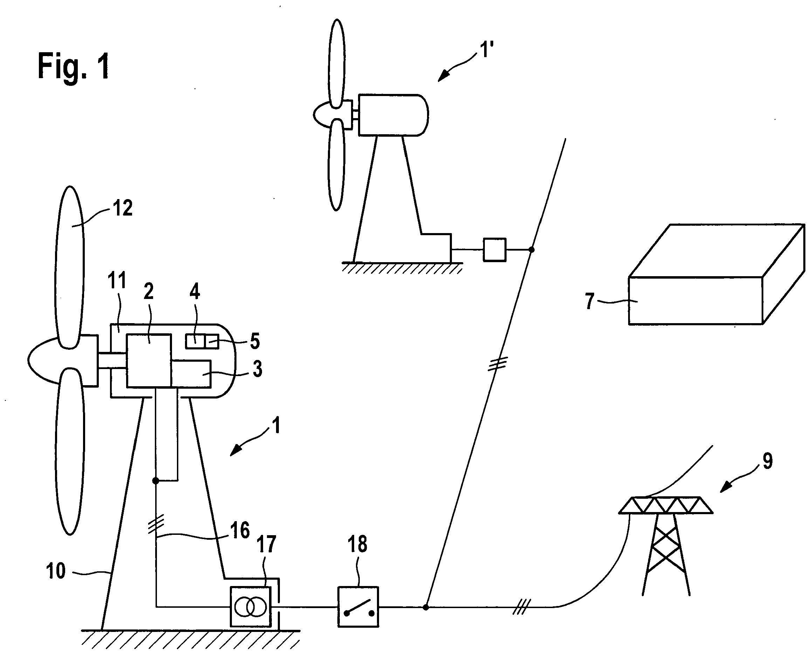

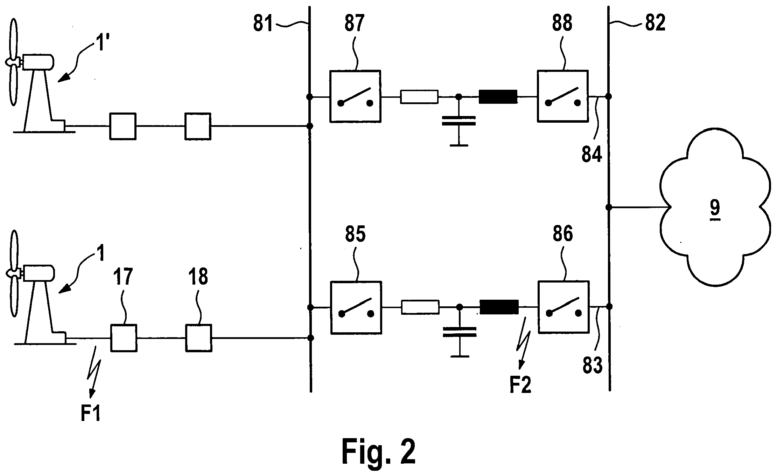

Die Anschaltung einer Windenergieanlage 1 (bzw. eines Windparks; zur Vereinfachung wird lediglich auf die Windenergieanlage Bezug genommen) an das Energieverteilungsnetz 9, wie es in Figur 1 nur grob schematisiert dargestellt ist, ist in Figur 2 detaillierter dargestellt. Die Windenergieanlage 1 ist über ihren Mittelspannungstransformator und das Schaltschütz 18 an eine erste Sammelschiene 81 angeschlossen. Bei der Sammelschiene kann es sich beispielsweise um ein internes Verbindungsnetz eines Windparks handeln, an das weitere Windenergieanlagen 1' angeschlossen sind. Die erste Sammelschiene 81 ist über mehrere, im dargestellten Beispiel zwei, Verbindungsleitungen 83, 84 mit einer zweiten Sammelschiene 82 verbunden. Die Verbindungsleitungen 83, 84 können kurz sein, weisen in den meisten Fällen aber eine solch beträchtliche Länge auf, dass ihr Wirk- und Blindwiderstand (dargestellt durch Ersatzkomponenten in Fig. 2) nicht vernachlässigbar ist. Beide Verbindungsleitungen 83 und 84 weisen an ihren beiden Enden an den Sammelschienen 81, 82 jeweils ein Schaltelement 85, 86, 87, 88 auf. Die zweite Sammelschiene 82 ist an das Energieverteilungsnetz 9 angeschlossen, und zwar gegebenenfalls über einen Hochspannungstransformator (nicht dargestellt).

Weiterhin sind in Figur 2 beispielhaft zwei Orte für mögliche Netzfehler durch Blitzsymbole F1 und F2 dargestellt. Das Verhalten bei Fehlern ist nachfolgend kurz erläutert. Betrachtet werden zwei Arten von Fehlern, ein erster Fehler F1 nahe der Windenergieanlage 1 und ein zweiter Fehler F2 nahe der zweiten Sammelschiene 82. Die Fehler sollen darin bestehen, dass ein Kurzschluss auftritt. Die Folge des Kurzschlusses ist, dass die Spannung in diesem Bereich auf nahezu null zusammenbricht, und dass gegebenenfalls der Generator der Windenergieanlage auf den Kurzschluss speist.

Zuerst sei das Verhalten einer herkömmlichen Windenergieanlage bei beiden Fehlern näher erläutert: Liegt ein Kurzschlussfehler im Bereich F1 vor, so bricht die verbleibende Spannung an der Windenergieanlage deutlich ein. Sie wird so niedrig, dass es zu einer Abschaltung der herkömmlichen Windenergieanlage käme. Die herkömmliche Windenergieanlage kann nach dem Abschalten erst dann wieder eine Neusynchronisation vornehmen und dann wieder Leistung in das Netz einspeisen, wenn ein ausreichendes Spannungsniveau im Bereich der Sammelschiene 81 erreicht ist. Nun sei angenommen, dass ein Fehler F2 in der zweiten Schiene 82 auftritt. Wegen der größeren Entfernung ist die verbleibende Spannung an der Windenergieanlage noch ausreichend hoch (oberhalb einer Schwelle von ca. 5 bis 15 % der Nennspannung), sodass der Umrichter der Windenergieanlage weiter elektrische Leistung in das Netz einspeisen könnte. Allerdings stellt sich bei Windenergieanlagen generell das Problem, dass sich in Folge der im Vergleich zu herkömmlichen Kraftwerken mit Synchrongeneratoren geringen Massenträgheit rasch Frequenzänderungen bzw. Phasenabweichungen einstellen. Es kommt zu einem Phasenunterschied und Ansteigen der Frequenz in dem Bereich der betroffenen Windenergieanlage.

Herkömmliche Windenergieanlagen mit Umrichter ohne Zusatzmaßnahme sind also nicht in der Lage, die Netzfrequenz und Phasenlage synchron zum Restnetz zu halten. Dies führt dazu, dass nach Fehlerklärung erhebliche Ausgleichsströme auf Grund abweichender Frequenz bzw. Phasenlage entstehen können. Um dem entgegen zu wirken, ist erfindungsgemäß ein Netzstörungsmodul 5 vorgesehen.

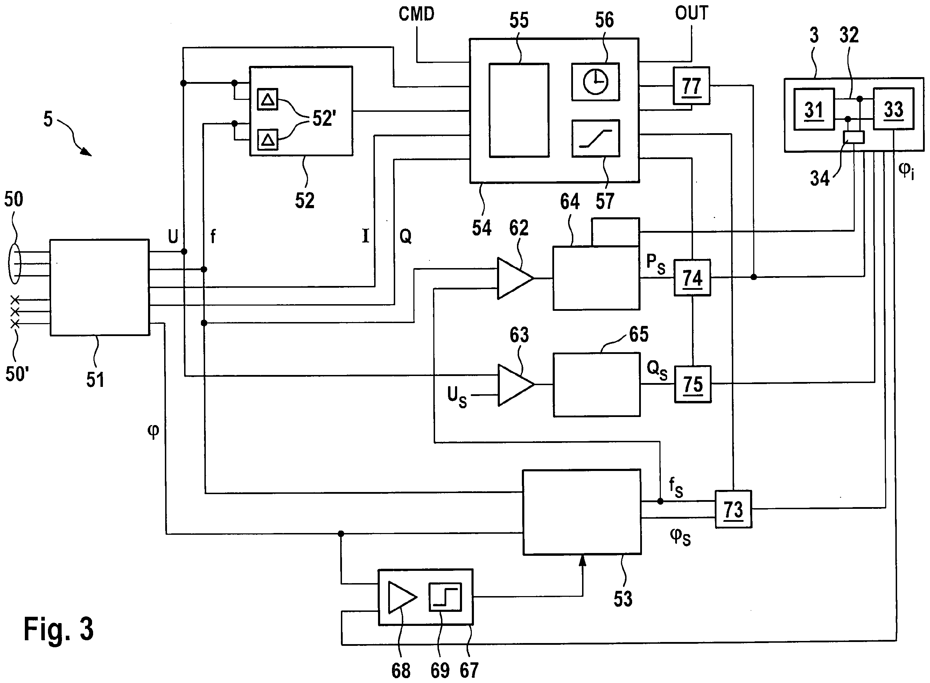

In Figur 3 ist das Netzstörungsmodul 5 dargestellt. Dessen Aufbau und Funktionsweise sollen nachfolgend näher erläutert werden. Messaufnehmer 50, 50' für Spannung bzw. Strom in den einzelnen Phasen des Netzes sind netzseitig an dem Mittelspannungstransformator 17 angeordnet. Ihre Messsignale sind als Eingangssignal an die Messeinrichtung 51 angelegt. Die Messeinrichtung 51 bestimmt daraus Parameter für die Netzspannung U, deren Frequenz f und Phasenlage ϕ. Das Signal für die Netzspannung U wie auch für die Netzfrequenz f ist an den Detektor 52 angelegt. Der Detektor 52 enthält Differenzierstufen 52' für die Eingangssignale, so dass außer dem absoluten Wert für die Netzspannung U auch ein Spannungsänderungssignal ΔU und entsprechend außer dem absoluten Signal für die Netzfrequenz auch ein Netzfrequenzänderungssignal Δf bereitsteht. Es sei angemerkt, dass alternativ zusätzlich zu der Spannung auch Netzströme verwendet werden können. Anhand der angelegten Signale bestimmt der Detektor 52 auf Grund des Betrags oder einer Änderung der Frequenz und/oder auf Grund des Betrags oder einer Änderung der Spannung U, ob sich aus dem Netz 9, an das die Windenergieanlage 1 angeschlossen ist, ein Inselnetz gebildet hat. Bei Erkennung einer Inselnetzbildung gibt der Detektor 52 ein entsprechendes Schaltsignal an seinem Ausgang aus.

Die von der Messeinrichtung 51 erzeugten Signale für die Frequenz f und für die Phasenlage ϕ werden als Eingangssignale an den Referenzgenerator 53 angelegt. Dieser erzeugt daraus mittels einer Schwingeinrichtung, wie einem stabilisierten Oszillator, einer PLL oder einer hochgenauen Funkuhr, einen kontinuierlichen Referenzwert für die Netzfrequenz. Der Referenzgenerator 53 ist dabei so ausgebildet, dass auch bei Ausbleiben von Signalen der Messeinrichtung 51 der Referenzwert weiter erzeugt wird. Der Referenzwert umfasst ein Frequenzsignal fₛ wie auch ein Phasensignal ϕₛ. Er wird als Führungsvektor am Ausgang des Referenzgenerators 53 ausgegeben und über ein Schaltelement 73 an den Umrichter 3 angelegt. Dieses schaltet den Führungsvektor in Abhängigkeit von einem angelegten Steuersignal durch.

Das von dem Detektor 52 erzeugte Schaltsignal für die Inselnetzbildung ist an einem Eingang der Fehlerführungseinheit 54 angelegt. An weiteren Eingängen sind Signale für die Netzspannung und optional weitere Signale für den Stromfluss in das Netz und die eingespeiste Blindleistung Q angelegt. Ein weiterer Eingang kann vorgesehen sein als Eingangskanal für Führungssignale CMD, wie beispielsweise zum Runterfahren der Windenergieanlage. Die Fehlerführungseinheit 54 umfasst einen Fehlerklassifikator 55, ein Zeitmodul 56 sowie ein Transitmodul 57. Der Fehlerklassifikator 55 dient dazu, aus den angelegten Eingangssignalen zu bestimmen, ob und ggf. welche Netzstörung vorliegt und eine geeignete Betriebsweise auszuwählen. Über einen Ausgangskanal OUT können Betriebszustände und/oder Parameter, wie für die Spannung U und die Frequenz f, ausgegeben werden.

Für den Betrieb bei Inselnetzbildung ist ein schneller Frequenzregler 64 vorgesehen. Er umfasst ein Differenzglied 62, an dessen Eingängen das von der Messeinrichtung 51 bestimmte Netzfrequenzsignal f und ein Signal für eine Sollnetzfrequenz, das vom Referenzgenerator 53 erzeugt ist, angelegt sind. Der Frequenzregler 64 ist dazu ausgebildet, bei Abweichungen zwischen der gemessenen Frequenz und der Sollfrequenz die von dem Umrichter 3 einzuspeisende Wirkleistung P mit einer schnellen Zeitkonstanten von vorzugsweise 10 bis 50 ms zu regeln. Dazu stellt der Frequenzregler 64 an seinem Ausgang ein Signal für eine Sollwirkleistung Pₛ bereit, welches über ein Schaltelement 74 an einen Steuereingang des Umrichters 3 angelegt ist. Weiter ist der Frequenzregler über eine Steuerleitung mit dem Chopper 34 des Umrichters 3 verbunden. Bei Bedarf kann er durch Ansteuern des Choppers 34 Energie vernichten, also die Wirkleistung schnell reduzieren, um so schnell und effizient die Frequenz an einem übermäßigen Ansteigen zu hindern.

Weiter ist eine Netzfolgeeinheit 67 vorgesehen. Sie umfasst einen Winkelablagedetektor 68 und einen Begrenzer 69. Der Winkelablagedetektor 68 weist zwei Eingänge auf, an die jeweils ein Signal für den Winkel (Phasenlage) im Netz, wie von der Messeinrichtung bestimmt, und der Phase ϕᵢ des Umrichters 3 angelegt sind. Aus der Differenz wird ein Signal für die Winkelablage (Differenzwinkel) gebildet. Dieses Signal ist an den Begrenzer angelegt, der es in Bezug auf den Betrag und gegebenenfalls auch in Bezug auf die Änderungsgeschwindigkeit auf Grenzwerte limitiert und am Ausgang der Netzfolgeinheit ausgibt. Das Ausgangssignal ist an den Referenzgenerator 53 angelegt. Damit wird bewirt, dass die Phase des Führungsvektors so geändert wird, dass der Umrichter 3 elektrische Leistung mit einer solchen Phase einspeist, dass die Grenzwerte nicht überschritten werden.

Weiter ist ein optionaler zusätzlicher Spannungsregler 65 vorgesehen. Er umfasst ein Differenzglied 63, das eine Differenz aus der tatsächlich gemessenen Netzspannung U und einem angelegten Sollspannungswert Uₛ bildet. Der Spannungsregler 63 ist dazu ausgebildet, basierend auf der Spannungsdifferenz eine Sollblindleistung Qₛ zu bestimmen, die als Steuersignal über ein Schaltelement 75 an den Umrichter 3 angelegt ist.

Die Betriebsweisen werden nachfolgend unter Bezugnahme auf Figur 3 näher erläutert. Mittels der Messeinrichtung 51 werden Strom und Spannung des Netzes gemessen, und daraus Signale für die Netzfrequenz f sowie die Phasenlage ϕ bestimmt. Basierend auf den so bestimmten Frequenz- und Phasensignalen erzeugt der Referenzgenerator 53 einen kontinuierlichen Referenzwert. Dieser kann als Führungsvektor für die Ansteuerung des Umrichters 3 verwendet werden. Weiter wertet der Detektor 52 die von der Messeinrichtung 51 bestimmten Signale für die Spannung und die Frequenz bzw. Phase aus, und gibt ein Ausgangssignal aus, wenn eine Inselnetzbildung erkannt wird. Sofern keine Inselnetzbildung erkannt wird, wiederholt sich der vorstehend beschriebene Vorgang. Wird eine Inselnetzbildung erkannt, so wird ein Schaltsignal an den Fehlerklassifikator 55 angelegt. Dieser ermittelt aus dem ebenfalls angelegten Signal für die Spannung U, ob die Spannung unter der Schwelle liegt, die für eine sichere Kennung der Spannung eingestellt ist (beispielsweise 5 bis 15% der Nennspannung des Netzes 9). In diesem Fall schaltet in einer ersten Betriebsweise der Fehlerklassifikator 55 das Schaltelement 73 durch, so dass der von dem Referenzgenerator 53 erzeugte Führungsvektor an den Umrichter 3 angelegt ist. Der Umrichter 3 speist so weiterhin Strom ein, während im Stand der Technik bei einer Spannung unter der Schwelle die weitere Einspeisung gestoppt wird.

Liegt hingegen die Spannung U über der vorgegebenen Schwelle, so wird bei durch den Detektor 52 erkannter Inselnetzbildung von dem Fehlerklassifikator 55 die erfindungsgemäße schnelle Frequenzregelung aktiviert. Dazu wird das Schaltelement 74 durchgeschaltet. Bei der schnellen Frequenzregelung wird versucht, mit einer Zeitkonstante im Bereich von wenigen 10ms, die Netzfrequenz wieder auf den gewünschten Wert zu regeln. Der Frequenzregler 64 bewerkstelligt dies, indem über ein Steuersignal die Wirkleistungseinspeisung P des Umrichters 3 verändert wird. Dabei kann optional vorgesehen sein, nicht nur auf die Frequenz f zu regeln, sondern vielmehr auch die Phase ϕ heranzuziehen. Der Sollwert der Phasenlage kann bereitgestellt werden durch den Referenzgenerator 53. Aus der Differenz wird eine Regelabweichung ermittelt, welche zu einer entsprechenden Veränderung der von dem Umrichter 3 eingespeisten Wirkleistung P führt. Ist zusätzlich die Betriebsweise Spannungsregelung durch Betätigen des Schaltelements 75 aktiviert, wird in entsprechender Weise die Istspannung gemessen und mit einem Sollwert verglichen. Als Sollwert kann ein von der Messeinrichtung 51 bestimmter Referenzwert für die Spannung vor Eintritt des Netzfehlers dienen. Sofern dieser Referenzwert aus der Spannung vor Eintritt des Netzfehlers gewonnen wurde, kann dieser beispielsweise ein Mittelwert aus einem vorgebbaren Zeitraum von Werten vor dem Netzfehler sein, wobei die Werte vor dem Eintreten des Netzfehlers gemessen und in der Steuerung der Windenergieanlage gespeichert wurden. Aus der ermittelten Spannungsdifferenz wird durch den Spannungsregler 65 ein Steuersignal gebildet, welches über das Schaltelement 75 an den Umrichter 3 angelegt ist, so dass die von dem Umrichter bereitgestellte Blindleistung in Abhängigkeit von der Spannungsdifferenz verändert wird. Zweckmäßigerweise ist vorgesehen, dass im Falle einer zu großen Spannungsdifferenz auf einen bestimmten Maximalwert geregelt wird, der nicht zu einer Überlastung des Umrichters führt.

Wird der Netzfehler geklärt, was der Fehlerklassifikator 55 beispielsweise anhand eines schnellen Wiederanstiegs der Spannung U oder einer sprungartigen Änderung der Phasenlage ϕ ermitteln kann, so beendet die Fehlerführungseinheit 54 die schnelle Frequenzregelung durch Abschalten der Schaltelemente 73,74,75 und die von dem Umrichter 3 einzuspeisende Wirkleistung wird wieder auf den Wert vor Fehlereintritt oder auf einen externen Vorgabewert eingestellt. Dazu ist ein Transitmodul 57 vorgesehen, welches beispielsweise eine Rampenfunktion implementiert. Das von dem Transitmodul 57 erzeugte entsprechende Steuersignal wird über das Schaltelement 77, welches von dem Fehlerklassifikator 55 in diesem Fall zugeschaltet wird, an den Umrichter 3 übertragen

Durch Zusammenwirken mit dem Zeitmodul 56 prüft der Fehlerklassifikator 55, ob innerhalb einer einstellbaren ersten Zeitdauer von beispielsweise 150ms nach Fehlereintritt die Spannung trotz der Einspeisung von Blindleistung immer noch auf einen Wert nahe null verharrt. Sollte dies der Fall sein, so erkennt der Fehlerklassifikator auf einen Kurzschluss in der Nähe der Windenergieanlage 1 (Fehlerfall F1), und gibt nach Ablauf dieser ersten Zeitdauer ein Signal zur Trennung der Windenergieanlage 1 von dem Netz aus (beispielsweise Öffnen des Schaltschütz 18). Damit kann sichergestellt werden, dass es nicht zu einer unzulässig langen Einspeisung von elektrischer Leistung auf einen Kurzschluss nahe der Windenergieanlage 1 kommt. Steigt hingegen die Spannung U nach Einspeisung von Blindleistung über einen einstellbaren Grenzwert an, so erkennt der Fehlerklassifikator 55, dass der Fehler sich in einem größeren Abstand zur Windenergieanlage 1 befindet (Fehlerfall F2). Die Windenergieanlage 1 kann dann für einen längeren Zeitraum betrieben werden, wodurch zusätzliche Leistung in das Netz eingespeist wird, was zur Beibehaltung der Betriebssicherheit des Netzes von Vorteil ist. Es ist zweckmäßig, wenn der Fehlerklassifikator 55 dann den Eingangskanal aktiviert. Damit ist es ermöglicht, dass Frequenzsollwerte von extern vorgegeben werden, die dann entsprechend angefahren werden. Damit kann eine Wiedersynchronisation der elektrischen Größen im Inselnetz mit denjenigen im Netz 9 erreicht werden. Außerdem ist vorzugsweise vorgesehen, dass der Fehlerklassifikator 55 Ist-Werte für die Frequenz und Spannung über den Ausgangskanal OUT ausgibt, um die Regelung von Frequenz und Spannung im Inselnetz mit anderen Energieerzeugern, wie anderen Windenergieanlagen, abstimmen zu können. Weiter prüft der Fehlerklassifikator 55, ob die Netzspannung nach einer bestimmbaren zweiten Zeitdauer, vorzugsweise 400ms, über eine Spannungsschwelle von beispielsweise 50% der Nennspannung steigt. Steigt sie nicht über diesen Wert, so erkennt der Fehlerklassifikator 55 einen schweren, nicht geklärten Fehler im Netz und gibt ein Schaltsignal zum Herunterfahren der Windenergieanlage aus. Ist hingegen ein Inselbetrieb mit Spannung über der Schwelle möglich, wird die Windenergieanlage erst auf ein externes Kommandosignal heruntergefahren.

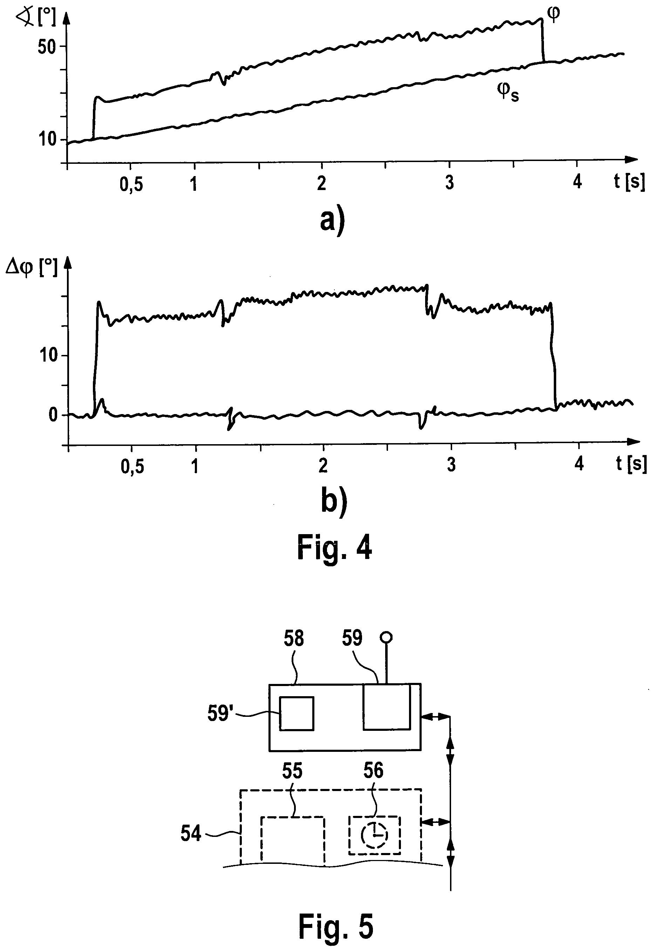

In Figur 4a und b sind Kennlinien für den Betrieb der erfindungsgemäßen schnellen Frequenzregelung bei Netzfehlern dargestellt. Figur 4a zeigt den Winkel der Netzspannung ϕ und den von dem Referenzgenerator 53 erzeugten Referenzwinkel ϕₛ während einer Netzstörung. Deutlich erkennt man das Einsetzen der Störung bei 0,2s und das Ende der Störung bei 3,8s durch Sprünge in der Winkellage der Netzspannung um ca. 15 bis 20°. In Figur 4b ist die Winkeländerung Δϕ der Netzspannung ohne (obere Linie) und mit (untere Linie) der erfindungsgemäßen schnellen Frequenzregelung dargestellt. Man erkennt, dass die Regeldifferenz zwischen dem Soll- und dem Istwert des Phasenwinkels von dem schnellen Frequenzregler 64 mit einer kurzen Zeitkonstante auf einen Wert nahe Null ausgeregelt wird.

In Fig. 5 ist eine optionale Ergänzung des Netzstörungsmoduls 5 dargestellt. Es ist zusätzlich ein Synchronisationsmodul 58 vorgesehen, das über eine Datenleitung mit dem Fehlerklassifikator 55, dem Frequenzregler 64 und dem Spannungsregler 65 (beide Regler sind in Fig. 5 nicht dargestellt) verbunden ist. Das Synchronisationsmodul umfasst vorzugsweise je eine eigene Kommunikationseinheit 59 und Zeitreferenz 59', kann aber auch über den Fehlerklassifikator 55 kommunizieren bzw. Zeitsignale von dessen Zeitmodul 56 empfangen. Das Synchronisationsmodul 58 dient dazu, die Windenergieanlage mit dem Parkmaster 7 bzw. einer externen Kontrollstelle, wie der Leitwarte eines Betreibers des Netz 9, und/oder mit anderen Windenergieanlagen 1', die vorzugsweise in demselben Windpark angeordnet sind, zu verbinden. Das Synchronisationsmodul 58 gleicht den Führungsvektor der eigenen Windenergieanlage mit dem anderer Windenergieanlagen 1' bzw. mit dem Parkmaster 7 (oder der Kontrollstelle) ab. Dazu ist das Synchronisationsmodul 56 derart ausgebildet, dass es den aktuellen Führungsvektor mit einem von der Zeitreferenz (oder dem Zeitmodul 56) bereitgestellten Zeitstempel versieht und über die Kommunikationseinheit 59 ausgibt. Umgekehrt empfängt das Synchronisationsmodul 58 entsprechende Signale von den anderen Windenergieanlagen bzw. dem Parkmaster 7 (oder der Kontrollstelle). Der Zeitstempel wird extrahiert und der aktuelle Führungsvektor wird unter Berücksichtigung der Zeitinformation berechnet und an den Fehlerklassifikator 55 ausgegeben.

Hierbei können optional verschiedene Varianten vorgesehen sein. In einer ersten Variante gibt der Parkmaster 7 zentral die Führungsgrößen für Spannung, Frequenz und Phasenlage aus. An den einzelnen Windenergieanlagen werden diese Größen ebenfalls erfasst und daraus Abweichungen berechnet, die abgespeichert werden. Bei Eintreten eines Netzfehlers erfolgt eine Abstimmung des von dem Netzstörungsmodul 5 bestimmten Führungsvektors mit dem Führungsvektor des Parkmasters 7. Dies erfolgt unter Berücksichtigung der eingespeicherten Abweichungen derart, dass zumindest die Frequenz in Übereinstimmung gebracht wird und die Phasenlage erforderlichenfalls je nach aktuellen Werten für Spannung und Strom und den elektrischen Charakteristika, beispielsweise der Verbindungsleitungen 83, 84, neu berechnet wird. In einer zweiten Variante erfolgt die Synchronisation dezentral. Dazu kommuniziert das Synchronisationsmodul 58 einer Windenergieanlage 1 mit mindestens einer anderen Windenergieanlage 1'. Dabei kann eine Kommunikationsstruktur in Gestalt einer Verkettung der einfachen windenergieanlagen 1, 1' oder einer Vermaschung vorgesehen sein, bei der jede der Windenergieanlagen 1, mit vorher bestimmten benachbarten Windenergieanlagen 1' kommuniziert. In einer dritten Variante erfolgt die Kommunikation mit einem externen Punkt außerhalb des Windparks. Dieser Punkt ist vorzugsweise so weit beabstandet, dass er mit einiger Wahrscheinlichkeit bei Auftreten des Netzfehlers nicht im Inselnetz, sondern im verbleibenden Netz 9 liegt. Somit kann bei dieser Variante auch bei länger dauernder Inselnetzbildung die Frequenz und Spannung synchron zu der im Netz 9 gehalten werden.

## Patentansprüche

1. Windenergieanlage mit einem von einem Windrotor (12) angetriebenen Generator (2) und einem Umrichter (3), der mittels eines Führungsvektors angesteuert ist, zur Erzeugung elektrischer Energie, die in eine Netz (9) eingespeist wird, und einer Steuereinrichtung (4),
wobei
die Steuerung ein Netzstörungsmodul (5) aufweist, welches als Komponenten umfasst,
eine Messeinrichtung (51) für mindestens einen elektrischen Parameter des Netzes (9),
einen Detektor (52) zur Erkennung einer Netzstörung und Ausgabe eines Schaltsignals, und
einen Referenzgenerator (53), und
eine Fehlerführungseinheit (54), die einen Fehlerklassifikator (55) aufweist und mit der Messeinrichtung (51), dem Detektor (52) und/oder dem Referenzgenerator(53) derart zusammenwirkt, dass in einem Unterspannungsfall bei Inselbetrieb ein Frequenzregler (64) aktiviert ist, der auf den Umrichter (3) einwirkt, um bei Abweichung der Frequenz im Inselbetrieb die Wirkleistungseinspeisung P zu verändern,
**dadurch gekennzeichnet, dass** der Referenzgenerator basierend auf dem von der Messeinrichtung bestimmten Parameter einen eigene Referenzwerte für Frequenz und Phase umfassenden Ersatzführungsvektor für den Umrichter erzeugt, und
dass der Frequenzregler eine Zeitkonstante aufweist, die um mindestens eine Größenordnung kleiner ist als die eines herkömmlichen Frequenzreglers.

2. Windenergieanlage nach Anspruch 1,
**dadurch gekennzeichnet, dass**
die Fehlerführungseinheit (54) weiter mit einem Spannungsregler (65) derart zusammenwirkt, um bei Inselbetrieb die Netzspannung durch Ändern der Blindleistung Q zu regeln.

3. Windenergieanlage nach Anspruch 1 oder 2,
**dadurch gekennzeichnet dass**,
die Fehlerführungseinheit (54) weiter dazu ausgebildet ist, in einem Kurzschlussfall den Ersatzführungsvektor auf den Umrichter (3) aufzuschalten.

4. Windenergieanlage nach einem der vorangehenden Ansprüche,
**dadurch gekennzeichnet, dass**
die Fehlerführungseinheit (54) ein Zeitmodul (56) aufweist, wobei der Fehlerklassifikator (55) mit dem Zeitmodul (56) insbesondere derart zusammenwirkt, dass bei anhaltendem Kurzschluss nach einer ersten Zeitdauer keine Leistung mehr in das Netz eingespeist wird und/oder bei anhaltender Unterspannung nach einer zweiten Zeitdauer keine Leistung mehr in das Netz neu eingespeist wird und/oder dass bei Inselbetrieb nach einer dritten Zeitdauer keine Leistung mehr in das Netz (9) eingespeist wird.

5. Windenergieanlage nach einem der vorangehenden Ansprüche,
**dadurch gekennzeichnet, dass**
die Fehlerführungseinheit (54) einen Eingangskanal (CMD), über den bei Inselbetrieb zumindest die Frequenz und/oder Phasenlage vorgebbar ist, und/oder einen Ausgangskanal (OUT) aufweist, über den bei Inselbetrieb der Führungsvektor ausgegeben wird.

6. Windenergieanlage nach einem der vorangehenden Ansprüche,
**dadurch gekennzeichnet, dass**
der schnelle Frequenzregler (64) zusätzlich auf einen Verbraucher einwirkt, wobei der Verbraucher ein steuerbarer Widerstand und/oder ein Chopper (35) an dem Umrichter (3) ist.

7. Windenergieanlage nach einem der vorangehenden Ansprüche,
**dadurch gekennzeichnet, dass**
die Fehlerführungseinheit (54) ein Transitmodul (57) aufweist, das eine Rampenfunktion aufweist und so bei einem Ende des Inselbetriebs das an den Umrichter gelegte Signal für die Wirkleistung wieder auf einen Vorgabewert zurückführt, wobei der Vorgabewert insbesondere der ursprünglichen Wert vor Eintritt des Netzfehlers oder ein aktuell geforderter Wert ist.

8. Windenergieanlage nach einem der vorangehenden Ansprüche,
**dadurch gekennzeichnet, dass**
eine Netzfolgeeinheit vorgesehen ist, die zum Begrenzen eines Differenzwinkels ausgebildet ist.

9. Windenergieanlage nach einem der vorangehenden Ansprüche,
**dadurch gekennzeichnet, dass**
ein Synchronisationsmodul (58) vorgesehen ist, das mit der Fehlerführungseinheit (54) und dem Frequenzregler (64) verbunden ist und derart zusammenwirkt, um den Führungsvektor mit einer externen Stelle abzugleichen.

10. Windenergieanlage nach Anspruch 9,
**dadurch gekennzeichnet, dass**
das Synchronisationsmodul eine Kommunikationseinheit (59) aufweist und/oder mit einer Zeitreferenz (56) zusammenwirkt, um dem Führungsvektor mit einem Zeitstempel zu versehen.

11. Windpark mit einem Parkmaster (7) und mehreren Windenergieanlagen (1), die einen von einem Windrotor (12) angetriebenen Generator (2) und einen Umrichter (3) zur Erzeugung elektrischer Energie aufweisen, die in ein Netz (9) eingespeist wird,
**dadurch gekennzeichnet, dass**
der Parkmaster ein Netzstörungsmodul (5) aufweist, das nach einem der Ansprüche 1 bis 8 ausgebildet ist.

12. Windpark nach Anspruch 11,
**dadurch gekennzeichnet, dass**
ein Synchronisationsmodul gemäß Anspruch 9 oder 10 an der Steuereinrichtung (4) angeordnet ist.

13. Verfahren zum Betreiben einer Windenergieanlage mit einem durch einen Windrotor (12) angetriebenen Generator (2) und einem Umrichter (3) zur Erzeugung elektrischer Energie, die in ein Netz (9) eingespeist wird, wobei der Umrichter (3) mittels eines Führungsvektors angesteuert wird,
**gekennzeichnet durch** die Schritte
Messen eines elektrischen Parameters des Netzes (9), Detektieren einer Inselnetzbildung mit Ausgabe eines Schaltsignals,
Klassifizieren eines Fehlers bei Erkennen des Schaltsignals,
wobei in einem Unterspannungsfall bei Inselbetrieb eine Frequenzregelung erfolgt, bei welcher mittels des Umrichters (3) durch Ändern der Wirkleistung P die Frequenz im Inselbetrieb geregelt wird,
**gekennzeichnet durch** den Schritt:
Generieren eines Referenzwertes als Führungsvektor basierend auf dem gemessenen Parameter für den Umrichter (3), wobei der Führungsvektor eigene Referenzwerte für Frequenz und Phase umfasst,
und **dadurch, dass**
die Frequenzregelung eine Zeitkonstante aufweist, die um mindestens eine Größenordnung kleiner ist als die einer herkömmlichen Frequenzregelung.

14. Verfahren nach Anspruch 13,
**gekennzeichnet durch**
Verwenden eines Netzstörungsmoduls (5) gemäß einem der Ansprüche 1 bis 7.

15. Verfahren nach Anspruch 14,
**gekennzeichnet durch**
Betreiben eines Synchronisationsmoduls (58) gemäß Anspruch 8 oder 9 insbesondere zum Synchronisieren der Windenergieanlage mit einem Parkmaster (7) oder Synchronisieren mit einer anderen Windenergieanlage (1').

16. Verfahren nach Anspruch 15,
**dadurch gekennzeichnet, dass**
parkexterne Vorgabewerte empfangen werden und auf diese synchronisiert wird.

## Claims

1. Wind energy installation having a generator (2), which is driven by a wind rotor (12), and having a converter (3), which is controlled by means of a reference vector, for producing electrical power, which is fed into a network (9), and having a control device (4),
wherein the control system has a network disturbance module (5) which, as components, comprises:
a measurement device (51) for at least one electrical parameter of the network (9),
a detector (52) for identifying a network disturbance and for outputting a switching signal, and
a reference generator (53), and
a fault management unit (54) which has a fault classifier (55) and interacts with the measurement device (51), the detector (52) and/or the reference generator (53) such that, in the event of an undervoltage during island operation, a frequency regulator (64) is activated, which acts on the converter (3) in order to vary the real-power feed P in the event of a discrepancy in the frequency during island operation,
**characterized in that** the reference generator produces a substitute reference vector comprising its own reference values for frequency and phase for the converter on the basis of the parameter determined by the measurement device, and
**in that** the frequency regulator has a time constant which is shorter by at least one order of magnitude than that of a conventional frequency regulator.

2. Wind energy installation according to Claim 1, **characterized in that**
the fault management unit (54) furthermore interacts with a voltage regulator (65) in such a way as to regulate the network voltage in the event of a change in the reactive power Q during island operation.

3. Wind energy installation according to Claim 1 or 2, **characterized in that**
the fault management unit (54) is furthermore designed to apply the substitute reference vector to the converter (3) in the event of a short circuit.

4. Wind energy installation according to one of the preceding claims,
**characterized in that**
the fault management unit (54) has a time module (56), wherein the fault classifier (55) interacts with the time module (56) particularly such that, in the event of a persistent short circuit, no more power is fed into the network after a first time period and/or in the event of a persistent undervoltage, no more power is newly fed into the network after a second time period and/or **in that**, during island operation, no more power is fed into the network (9) after a third time period.

5. Wind energy installation according to one of the preceding claims,
**characterized in that**
the fault management unit (54) has an input channel (CMD), via which at least the frequency and/or phase angle can be predetermined during island operation, and/or has an output channel (OUT) via which the reference vector is output during island operation.

6. Wind energy installation according to one of the preceding claims,
**characterized in that**
the quick-action frequency regulator (64) additionally acts on a load, wherein the load is a controllable resistance and/or a chopper (35) on the converter (3).

7. Wind energy installation according to one of the preceding claims,
**characterized in that**
the fault management unit (54) has a transit module (57), which has a ramp function and thus, at an end of island operation, the signal which is applied to the converter for the real power returns to a preset value again, wherein the preset value is in particular the original value before the occurrence of the network fault, or is a currently demanded value.

8. Wind energy installation according to one of the preceding claims,
**characterized in that**
a network following unit is provided, and is designed to limit a difference angle.

9. Wind energy installation according to one of the preceding claims,
**characterized in that**
a synchronization module (58) is provided, is connected to the fault management unit (54) and to the frequency regulator (64), and interacts in such a way as to match the reference vector to an external point.

10. Wind energy installation according to Claim 9, **characterized in that**
the synchronization module has a communication unit (59) and/or interacts with a time reference (56) in order to provide the reference vector with a time stamp.

11. Wind farm having a farm master (7) and a plurality of wind energy installations (1), which have a generator (2), which is driven by a wind rotor (12), and a converter (3) for producing electrical power which is fed into a network (9),
**characterized in that**
the farm master has a network disturbance module (5) which is designed according to one of Claims 1 to 8.

12. Wind farm according to Claim 11,
**characterized in that**
a synchronization module according to Claim 9 or 10 is arranged at the control device (4).

13. Method for operating a wind energy installation having a generator (2), which is driven by a wind rotor (12), and a converter (3) for producing electrical power which is fed into a network (9), wherein the converter (3) is controlled by means of a reference vector,
**characterized by** the following steps:
measurement of an electrical parameter of the network (9),
detection of island network formation with the output of a switching signal,
classification of a fault on identification of the switching signal
wherein in the event of an under voltage during island operation, frequency regulation is carried out, in which the frequency during island operation is regulated by means of the converter (3) by varying the real power P, **characterized by** the step:
generation of a reference value as a reference vector based on the measured parameter for the converter (3), the reference vector comprises its own reference values for frequency and phase,
and in that the frequency regulation has a time constant which is shorter by at least one order of magnitude than that of convetional frequency regulation.

14. Method according to Claim 13,
**characterized by**
use of a network disturbance module (5) according to one of Claims 1 to 7.

15. Method according to Claim 14,
**characterized by**
operation of a synchronization module (58) according to Claim 8 or 9, in particular for synchronization of the wind energy installation with a farm master (7) or synchronization with another wind energy installation (1').

16. Method according to Claim 15,
**characterized in that**
farm-external preset values are received, and are used for synchronization.

## Revendications

1. Aérogénérateur comprenant un générateur (2) entraîné par un rotor éolien (12) et un convertisseur statique (3) qui est excité au moyen d'un vecteur pilote, en vue de générer de l'énergie électrique qui est injectée dans un réseau (9), et un dispositif de commande (4),
la commande possédant un module de perturbation du réseau (5) qui comprend, en tant que composants,
un dispositif de mesure (51) pour au moins un paramètre électrique du réseau (9),
un détecteur (52) destiné à reconnaître une perturbation du réseau et délivrer un signal de commutation, et
un générateur de référence (53),
et
une unité pilote de défaut (54) qui possède un classificateur de défaut (55) et qui coopère avec le dispositif de mesure (51), le détecteur (52) et/ou le générateur de référence (53) de telle sorte que dans le cas d'une sous-tension lors d'un fonctionnement en îlotage, un régulateur de fréquence (64) est activé, lequel agit sur le convertisseur statique (3) en vue de modifier l'injection de puissance active P lors d'un écart de fréquence en fonctionnement en îlotage,
**caractérisé en ce que** le générateur de référence, en se basant sur le paramètre déterminé par le dispositif de mesure, génère pour le convertisseur statique un vecteur pilote de substitution comportant ses propres valeurs de référence pour la fréquence et la phase, et
**en ce que** le régulateur de fréquence possède une constante de temps qui est inférieure d'au moins un ordre de grandeur à celle d'un régulateur de fréquence conventionnel.

2. Aérogénérateur selon la revendication 1, **caractérisé en ce que** l'unité pilote de défaut (54) coopère en outre avec un régulateur de tension (65) de manière à réguler la tension du réseau lors d'un fonctionnement en îlotage en modifiant la puissance réactive Q.

3. Aérogénérateur selon la revendication 1 ou 2, **caractérisé en ce que** l'unité pilote de défaut (54) est en outre configurée pour, dans le cas d'un court-circuit, commuter le vecteur pilote de substitution sur le convertisseur statique (3).

4. Aérogénérateur selon l'une des revendications précédentes, **caractérisé en ce que** l'unité pilote de défaut (54) possède un module de temporisation (56), le classificateur de défaut (55) coopérant avec le module de temporisation (56) de telle sorte qu'en présence d'un court-circuit persistant, plus aucune puissance n'est injectée dans le réseau après une première durée et/ou, en présence d'une sous-tension persistante, plus aucune puissance n'est réinjectée dans le réseau après une deuxième durée et/ou **en ce que** lors d'un fonctionnement en îlotage, plus aucune puissance n'est injectée dans le réseau (9) après une troisième durée.

5. Aérogénérateur selon l'une des revendications précédentes, **caractérisé en ce que** l'unité pilote de défaut (54) possède un canal d'entrée (CMD), par le biais duquel au moins la fréquence et/ou la position de phase peut être prédéfinie lors d'un fonctionnement en îlotage, et/ou un canal de sortie (OUT) par le biais duquel est délivré le vecteur pilote lors d'un fonctionnement en îlotage.

6. Aérogénérateur selon l'une des revendications précédentes, **caractérisé en ce que** le régulateur de fréquence (64) rapide agit en outre sur un récepteur, le récepteur étant une résistance commandable et/ou un hacheur (35) au niveau du convertisseur statique (3).

7. Aérogénérateur selon l'une des revendications précédentes, **caractérisé en ce que** l'unité pilote de défaut (54) possède module de transit (57), lequel possède une fonction de rampe et ramène ainsi le signal pour la puissance active appliqué au convertisseur statique à une valeur de consigne à la fin du fonctionnement en îlotage, la valeur de consigne étant notamment la valeur originelle avant que survienne le défaut du réseau ou une valeur actuellement exigée.

8. Aérogénérateur selon l'une des revendications précédentes, **caractérisé en ce qu'**une unité de suivi du réseau est présente, laquelle est configurée pour limiter un angle différentiel.

9. Aérogénérateur selon l'une des revendications précédentes, **caractérisé en ce qu'**un module de synchronisation (58) est présent, lequel est relié à l'unité pilote de défaut (54) et au régulateur de fréquence (64) et coopère avec ceux-ci de manière à équilibrer le vecteur pilote avec un emplacement externe.

10. Aérogénérateur selon la revendication 9, **caractérisé en ce que** le module de synchronisation possède une unité de communication (59) et/ou coopère avec une référence de temps (56) en vue de munir le vecteur pilote d'une estampille temporelle.

11. Parc éolien comprenant un maître de parc (7) et plusieurs aérogénérateurs (1) qui possèdent un générateur (2) entraîné par un rotor éolien (12) et un convertisseur statique (3) destiné à générer de l'énergie électrique qui est injectée dans un réseau (9),
**caractérisé en ce que** le maître de parc possède un module de perturbation du réseau (5) qui est configuré selon l'une des revendications 1 à 8.

12. Parc éolien selon la revendication 11, **caractérisé en ce qu'**un module de synchronisation selon la revendication 9 ou 10 est disposé au niveau du dispositif de commande (4).

13. Procédé pour faire fonctionner un aérogénérateur comprenant un générateur (2) entraîné par un rotor éolien (12) et un convertisseur statique (3) destiné à générer de l'énergie électrique qui est injectée dans un réseau (9), le convertisseur statique (3) étant excité au moyen d'un vecteur pilote,
**caractérisé par** les étapes suivantes
mesure d'un paramètre électrique du réseau (9), détection de la formation d'un réseau en îlotage avec délivrance d'un signal de commutation,
classification d'un défaut en cas de reconnaissance du signal de commutation,
une régulation de fréquence étant effectuée dans le cas d'une sous-tension lors d'un fonctionnement en îlotage, avec laquelle la fréquence en fonctionnement en îlotage est régulée au moyen du convertisseur statique (3) en modifiant la puissance active P,
**caractérisé par** l'étape de:
génération d'une valeur de référence en tant que vecteur pilote en se basant sur le paramètre mesuré pour le convertisseur statique (3), le vecteur pilote comportant ses propres valeurs de référence pour la fréquence et la phase, et
en ce que la régulation de fréquence possède une constante de temps qui est inférieure d'au moins un ordre de grandeur à celle d'une régulation de fréquence conventionnelle.

14. Procédé selon la revendication 13, **caractérisé par** l'utilisation d'un module de perturbation du réseau (5) selon l'une des revendications 1 à 7.

15. Procédé selon la revendication 14, **caractérisé par** l'exploitation d'un module de synchronisation (58) selon la revendication 8 ou 9, notamment pour synchroniser l'aérogénérateur avec un maître de parc (7) ou synchroniser avec un autre aérogénérateur (1').

16. Procédé selon la revendication 15, **caractérisé en ce que** des valeurs de consigne externes au parc sont reçues et la synchronisation est effectuée sur celles-ci.
